# EUROPÄISCHE PATENTANMELDUNG

(11) **EP 2 546 529 A2**
(43) Veröffentlichungstag der Anmeldung: **16.01.2013**
(21) Anmeldenummer: 12005134.7
(22) Anmeldetag: 12.07.2012
(51) Int. Cl.: F04D 29/66, F04D 29/68, F04D 27/02

(54) **System zu Einblasen eines Fluids, Verdichter sowie Turbomaschine**

(30) Priorität: 15.07.2011 DE 102011107523
(71) Anmelder: MTU Aero Engines GmbH, 80995 München (DE)
(72) Erfinder: Hiller, Sven-Jürgen, 85244 Röhrmoos (DE)

(57) **Zusammenfassung**

Offenbart sind ein System (6) zum Einblasen eines Fluids (12) in eine Wandgrenzschicht einer Strömung (4) in einer Turbomaschine mit einer Vielzahl von Düsen (8), die in einem einer der Strömung (4) begrenzenden Seitenwandung (2) angeordnet und schräg in Strömungsrichtung (x) orientiert sind, wobei die Düsen (8) jeweils einen rechteckigen flachen Düsenquerschnitt (22) haben, ein Verdichter mit einem derartigen System sowie eine Turbomaschine mit einem derartigen Verdichter.

## Beschreibung

Die Erfindung betrifft ein System zum Einblasen eines Fluids in eine Wandgrenzschicht einer Strömung in einer Turbomaschine nach dem Oberbegriff des Patentanspruchs 1, einen Verdichter sowie eine Turbomaschine.

Bei Verdichtern in Turbomaschinen kann regelmäßig beim Betreiben der Verdichter außerhalb eines Auslegungspunktes der Laufschaufeln ein sogenanntes Verdichterpumpen einsetzen, bei dem sich der Druck im Verdichter in Folge einer Strömungsablösung an den Laufschaufeln von hinten nach vorne abbaut und eine Rückströmung gebildet wird. Ein derartiges Verdichterpumpen wirkt sich nachteilig auf den Wirkungsgrad der Turbomaschine aus. Zudem treten in der Beschaufelung hohe Belastungen auf, die zum Teil auf ein Schwingen bzw. Flattern während der Rückströmphase zurückzufähren sind. Die Gefahr einer Strömungsablösung lässt sich reduzieren, wenn eine Wandgrenzschicht der Ringraumströmung energetisiert wird. Die Energetisierung der Wandgrenzschicht kann zum einen durch passive Systeme wie statorseitige Rippen oder Vertiefungen erfolgen. Zum anderen sind aktive Systeme bekannt, die ein Einblasen eines Fluids durch eine Vielzahl von umfangsseitig angeordneten Düsen in die Ringraumströmung vorsehen. Bekannte aktive Systeme haben Düsen mit einem runden Querschnitt, wodurch jedoch nur eine stark begrenzte Energetisierung der Wandgrenzschicht erfolgt und zudem hohe Vermischungsverluste auftreten. Aus der DE 10 2008 052 372 A1 ist ein aktives System mit rechteckigen Düsenquerschnitten und einem Längen-Höhen-Verhältnis von etwa l/h = 3 bekannt. Derartig hohe Düsenquerschnitte bewirken jedoch eine verhältnismäßig starke Rückwirkung der Ringraumströmung auf die Düsenströmung.

Aufgabe der Erfindung ist es, ein System zum Einblasen eines Fluids in eine Wandgrenzschicht einer Strömung in eine Turbomaschine zu schaffen, das die vorgenannten Nachteile beseitigt und eine bessere Energetisierung sowie eine Reduzierung von Vermischungsverlusten ermöglicht. Des Weiteren ist es Aufgabe der Erfindung, einen Verdichter mit einer höheren Pumpgrenze sowie eine Turbomaschine mit einem verbesserten Wirkungsgrad zu schaffen.

Diese Aufgabe wird gelöst durch ein System mit den Merkmalen des Patentanspruchs 1, durch einen Verdichter mit den Merkmalen des Patentanspruchs 10 sowie durch eine Turbomaschine mit den Merkmalen des Patentanspruchs 12.

Ein erfindungsgemäßes System zum Einblasen eines Fluids in eine Wandgrenzschicht einer Strömung in einer Turbomaschine hat eine Vielzahl von Düsen, die in einer die Strömung begrenzenden Seitenwandung angeordnet und schräg in Strömungsrichtung orientiert sind. Erfindungsgemäß haben die Düsen jeweils einen rechteckigen flachen Düsenquerschnitt. Insbesondere haben die Düsen einen Düsenquerschnitt mit einem Längen-Höhen-Verhältnis (l/h) von etwa l/h = 4 bis 20. Durch den rechteckigen flachen und insbesondere schlitzartigen Düsenquerschnitt wird der sogenannte Coanda-Effekt verbessert und effizienter ausgenutzt, wodurch eine verbesserte Energetisierung der Wandgrenzschicht bei minimalen Vermischungsverlusten erfolgt.

Die Effizienz lässt sich weiter steigern, wenn stromaufwärts der Düsen jeweils ein Einblaskanal mit einer eine Grenzfläche bildenden Engstelle angeordnet ist. Die Engstelle ermöglicht, dass in der Düse ein niedriger Ringraumdruck herrscht und somit ein Druckstoß weg von der Seitenwandung in die Düse gelegt wird. Hierdurch tritt das einzublasende Fluid senkrecht auf die Grenzfläche auf, wodurch es ohne Brechung in die Düse eingekoppelt wird.

Um Strömungsturbulenzen stromabwärts der Engstelle innerhalb den Düsen zu reduzieren, ist es vorteilhaft, wenn die Grenzfläche den Düsenquerschnitt definiert und das Fluid in den Düsen bzw. die Düsenströmung keiner zusätzlichen Druck- oder Geschwindigkeitsverfinderung unterliegt.

Die Engstelle lässt sich strömungsgünstig gestalten, wenn der Einblaskanal in Richtung der Engstelle keil- bzw. trichterförmig verjüngt ist

Zur weiteren Effizienzsteigerung kann es vorteilhaft sein, wenn die Düsen in Strömungsrichtung flach angestellt sind, da das Fluid hierdurch nahezu in Axialrichtung der Strömung eingeblasen wird.

Beispielsweise sind die Düsen in einem Winkel ≤40° in Strömungsrichtung angestellt. Bevorzugterweise sind sie in einem Winkel von 30° in Strömungsrichtung angestellt.

Bei einem Ausführungsbeispiel sind Düsenaustrittsflächen tangential zur Rotationsrichtung orientiert. wodurch die Düsenströmung drallbefreit in die Strömung eingeblasen wird.

Zur Drallbeaufschlagung des eingeblasenen Fluids können die Düsenaustrittsflächen zur Rotationsrichtung angestellt sein. Dabei können sie sowohl in Rotationsrichtung als auch gegen die Rotationsrichtung angestellt sein. Beispielsweise sind sie um einen Winkel von 20° in bzw. gegen die Rotationsrichtung orientiert.

Ein erfindungsgemäßer Verdichter hat ein erfindungsgemäßes System zum Einblasen eines Fluids in eine Wandgrenzschicht. Ein derartiger Verdichter zeichnet sich durch eine deutlich erweiterte Pumpgrenze und somit durch eine hohe Verdichterstabilität und eine reduzierte Schaufelbelastung aus. Zudem erfolgt nahezu bzw. keine Rückwirkung der Ringraumströmung des Verdichters auf die Düsenströmung des Systems, so dass das System in jedem Betriebszustand des Verdichters stabil betrieben werden kann.

Die Verdichterstabilität lässt sich bereits mit einer minimalen Fluidmenge wirkungsvoll erhöhen, wenn das System mit seinen Düsen gegentiber den Schaufelbereichen positioniert ist, in denen eine Strömungsablösung zu erwarten ist. Bei einem Ausführungsbeispiel sind die Düsen daher statorseitig im Bereich von Hinterkanten zumindest einer von Laufschaufeln gebildeten Laufschaufelreihe angeordnet.

Eine erfindungsgemäße Turbomaschine hat einen erfindungsgemäßen Verdichter. Eine derartige Turbomaschine zeichnet sich durch geringe Wirkungsgradverluste und somit durch einen hohen Wirkungsgrad aus, da die Energetisierung der Wandgrenzschicht verbessert und Vermischungsverluste reduziert sind.

Sonstige vorteilhafte Ausführungsbeispiele der Erfindung sind Gegenstand weiterer Unterensprüche.

Im Folgenden werden bevorzugte Ausführungsbeispiele der Erfindung anhand stark vereinfachter schematischer Darstellungen näher erläutert. Es zeigen:
Figur 1 einen Teilschnitt durch einen Ringraum eines Verdichters einer Turbomaschine,
Figur 2 eine perspektivische Darstellung eines erfindungsgemäßen Systems, und
Figuren 3, 4 und 5 Draufsichten auf einen abgewickelten Umfangsabschnitt einer Laufschaufelreihe mit jeweils einer statorseitigen Systemdüse.

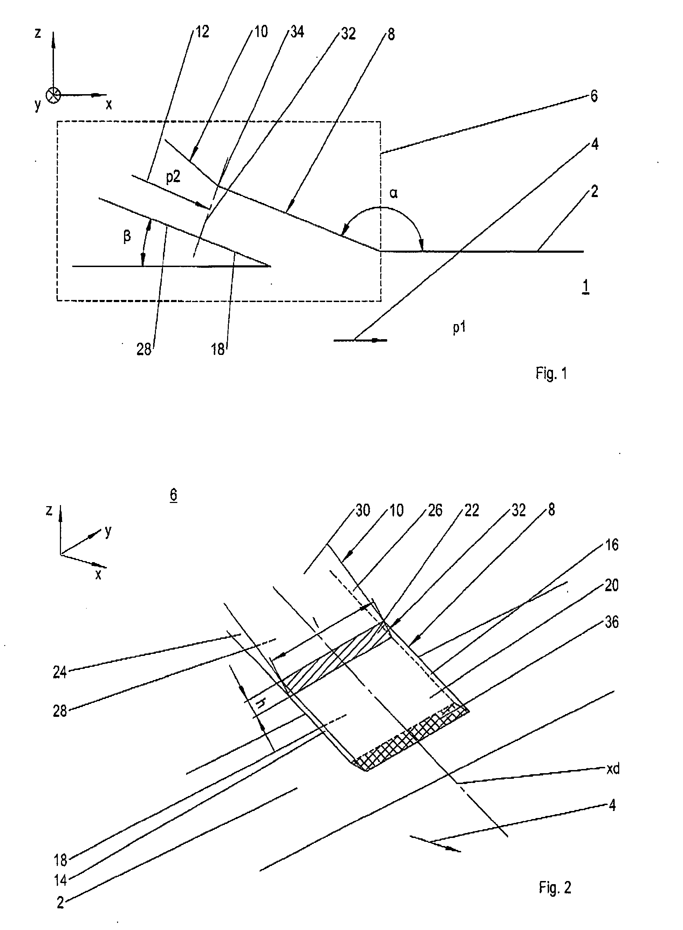

Figur 1 zeigt einen Teilschnitt durch einen Ringraum 1 eines Verdichters eines Flugzeugtriebwerks. Der Ringraum 1, in dem der niedrige Ringraumdruck p1 herrscht, wird von einer Seitenwandung 2 radial begrenzt und von einer in Längsrichtung x des Flugzeugtriebwerks orientierten Strömung 4 durchströmt.

In einem axialen Abschnitt der Seitenwandung 2 ist umfangsseitig ein gestrichelt umrahmtes System 6 mit einer Vielzahl von Düsen 8 und mit einer Vielzahl von Einblaskanälen 10 angeordnet. Das System 6 dient zur Energetisierung einer Wandgrenzschicht der Strömung 4 und ermöglicht ein Einblasen eines Fluids 12 mit einem hohen Einblasdruck p2 in den Ringraum 1.

Die Düsen 8 sind gleichmäßig voneinander beabstandet über den Umfang des Ringraums 1 verteilt. Sie sind jeweils stromabwärts eines Einblaskanals 10 angeordnet und münden in den Ringraum 1. Wie in Figur 2 gezeigt, haben sie eine Düsenlängsachse xd, die schräg zur Längsachse x des Flugzeugtriebwerks und somit zur Strömung 4 angestellt ist.

Die Düsen 8 haben jeweils zwei seitliche Wandungen 14, 16 sowie eine radial innen liegende bzw. innere Wandung 18 sowie eine radial außen liegende bzw. äußere Wandung 20. Die Wandungen 14, 16,18, 20 definieren einen längsschraffiert dargestellten rechteckigen flachen und konstanten Düsenquerschnitt 22. Der Düsenquerschnitt 22 ist über die Düsenlänge xd konstant und weist mit einem Längen-Höhen-Verhältnis (l/h) von etwa l/h = 4 bis 20 eine schlitzartige Form auf.

Die Einblaskanäle 10 sind zwischen den Düsen 8 und einem nicht gezeigten Gebläse angeordnet. Wie in Figur 2 gezeigt, haben sie jeweils zwei seitliche Wandungen 24, 26 sowie eine radial innere Wandung 28 und eine radial äußere Wandung 30. Die Wandungen 24, 26, 28, 30 definieren einen sich in Strömungsrichtung keilförmig verjüngenden rechteckigen Querschnitt. Dabei sind die seitlichen Wandungen 24, 26 sowie die innere Wandung 28 parallel zur Düsenlängsachse xd orientiert und gehen bündig in die seitlichen Düsenwaudungen 14, 16 bzw. in die innere Düsenwandung 18 über. Die äußere Wandung 30 der Einblaskanäle 10 ist schräg in Richtung der Düsenlängsachse xd orientiert, wodurch eine als Querschnittsverjüngung ausgebildete in Figur 1 bezifferte Engstelle 32 geschaffen wird, die eine orthogonal zur Düsenlängsachse xd angestellte Grenzfläche 34 definiert.

Die Grenzfläche 34 trennt bezogen auf die Druckverhältnisse den hohen Einblasdruck p2 von dem niedrigen Ringraumdruck p1. Der hohe Einblasdruck p2 herrscht stromaufwärts der Grenzfläche 34 in den Einblaskanälen 10 vor. Der niedrige Ringraumdruck p1 herrscht stromabwärts der Grenzfläche 34 in den Düsen 8 und in dem Ringraum 1 vor. Somit bildet die Grenzfläche 34 eine Trennebene zwischen zwei unterschiedlich dichten Medien 4,12 bzw. Fluiden aus, wobei jedoch das Fluid 12 aufgrund der Ausrichtung der Grenzfläche 34 orthogonal zur Düsenlängsachse xd ohne Brechung in das dünnere Medium 4 eingekoppelt wird.

Zur Ermöglichung einer Einblasung des Fluids 12 nahezu in Axialrichtung der Strömung 4 ist die Düsenlängsachse xd flach zur Längsachse x des Flugzeugtriebwerks angestellt. "Flach" bedeutet dabei in einem Außenwinkel α zwischen der Seitenwandung 2 und der äußeren Düsenwandung 20 mit α ≥ 150°. Alternativ bedeutet "flach" in einem Innenwinkel β zwischen der Seitenwandung 2 und der inneren Düsenwandung 18 bzw. der inneren Einblaskanalwandung 28 mit β ≤ 40°, bevorzugterweise β = 30°. Ergänzend sei erwähnt, dass der Ringraum 1, wie in Figur 1 gezeigt, stromabwärts der Düsen 8 radial erweitert sein kann, so dass ein Teilstrom des Fluid 12 bzw. einer Düsenströmung axial bzw. quasi axial in die Wandgrenzschicht eingeblasen wird.

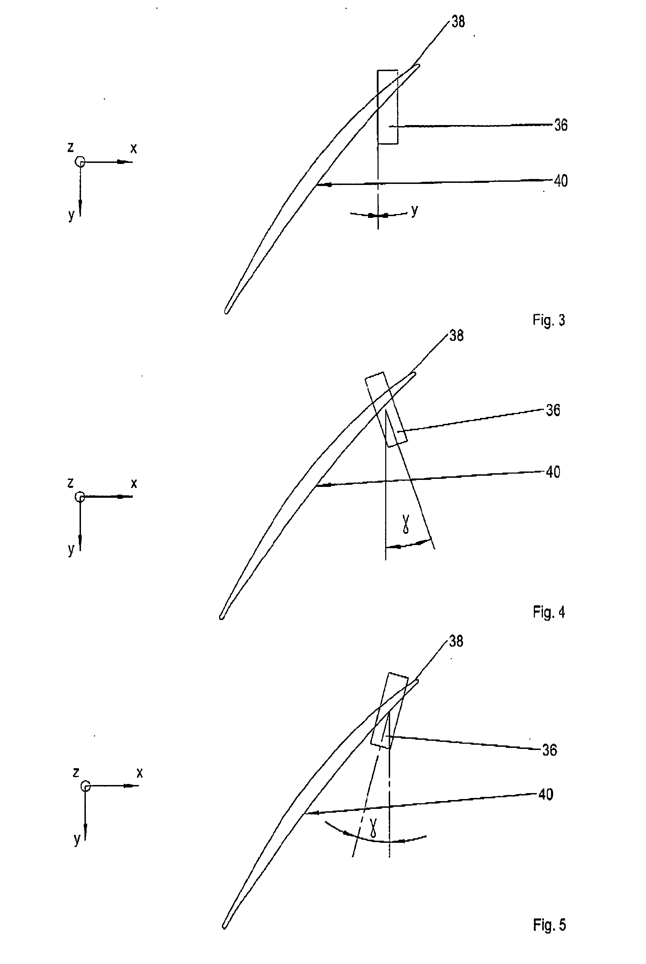

Die Düsen- 8 haben jeweils eine in Figur 2 kreuzschraffiert dargestellte Düsenaustrittsfläche 36. Diese mündet, wie in den Figuren 3, 4 und 5 gezeigt, jeweils radial gegenüber einem Hinterkantenbereich 38 einer von Laufschaufeln 40 gebildeten Schaufelreihe in den Ringraum 1.

Wie ebenfalls in Figur 3 gezeigt, verlaufen die Düsenaustrittsflächen 36 bei einem Ausführungsbeispiel tangential in Umfangsrichtung y und somit tangential zur Rotationsrichtung.

Bei einem in Figur 4 gezeigten Ausführungsbeispiel sind die Düsenaustrittsflächen 36 zur Drallbeaufschlagung des Fluids 12 um einen Winkel γ in Rotationsrichtung angestellt.

Bei einem in Figur 5 gezeigten Ausführungsbeispiel sind die Düsenaustrittsflächen 36 zur Drallbeaufschlagung des Fluids 12 um einen Winkel γ gegen die Rotationsrichtung angestellt. Bevorzugterweise beträgt bei den Ausfuhrungsbeispielen nach den Figuren 4 und 5 der Winkel γ ± 20° in Rotationsrichtung bzw. Umfangsrichtung y.

Offenbart sind ein System zum Einblasen eines Fluids in eine Wandgrenzschicht einer Strömung in einer Turbomaschine mit einer Vielzahl von Düsen, die in einem einer der Strömung begrenzenden Seitenwandung angeordnet und schräg in Strömungsrichtung orientiert sind, wobei die Düsen jeweils einen rechteckigen flachen Düsenquerschnitt haben, ein Verdichter mit einem derartigen System sowie eine Turbomaschine mit einem derartigen Verdichter.

### Bezugszeichenliste

- 1: Ringraum
- 2: Seitenwandung
- 4: Strömung
- 6: System
- 8: Düsen
- 10: Einblaskanal
- 12: Fluid
- 14: seitliche Wandung
- 16: seitliche Wandung
- 18: innere Wandung
- 20: äußere Wandung
- 22: Düsenquerschnitt
- 24: seitliche Wandung
- 26: seitliche Wandung
- 28: innere Wandung
- 30: äußere Wandung
- 32: Engstelle
- 34: Grenzfläche
- 36: Düsenaustrittsfläche
- 38: Hinterkantenbereich
- 40: Laufschaufel

- 1: Länge Düsenquerschnitt
- h: Höhe Düsenquerschnitt
- p1: Ringaumdruck
- p2: Einblasdruck
- x: Längsache Flugzeugtriebwerk
- y: Umfangsrichtung / Rotationsrichtung
- z: Hochrichtung / Radialrichtung
- xd: Düsenlängsachse
- α: Außenwinkel
- β: Innenwinkel
- γ: Winkel Düsenaustrittsfläche zur Rotationsrichtung

## Patentansprüche

1. System (6) zum Einblasen eines Fluids (12) in eine Wandgrenzschicht einer Strömung (4) in einer Turbomaschine, mit einer Vielzahl von Düsen (8), die in einer die Strömung (4) begrenzenden Seitenwandung (2), angeordnet und schräg in Strömungsrichtung (x) orientiert sind, **dadurch gekennzeichnet, dass** die Düsen (8) jeweils einen rechteckigen flachen Düsenquerschnitt (22) haben.

2. System nach Anspruch 1, wobei stromaufwärts der Düsen (8) jeweils ein Einblaskanal (10) mit einer eine Grenzfläche (34) bildenden Engstelle (32) angeordnet ist.

3. System nach Anspruch 2, wobei die Grenzfläche (34) den Düsenquerschnitt (22) definiert.

4. System nach Anspruch 2 oder 3, wobei der Einblaskanal (10) stromaufwärts der Engstelle (32) trichterförmig erweitert ist.

5. System nach einem der vorhergehenden Ansprüche, wobei die Düsen (8) in Strömungsrichtung flach angestellt sind.

6. System nach Anspruch 4, wobei die Düsen (8) in einem Winkel (β) ≤ 40° in Strömungsrichtung angestellt sind.

7. System nach einem der vorhergehenden Ansprüche, wobei Düsenaustrittsflächen (36) tangential zur Rotationsrichtung orientiert sind.

8. System nach einem Ansprüche 1 bis 6, wobei die Düsenaustrittsflächen (36) in Rotationsrichtung angestellt sind.

9. System nach einem Ansprüche 1 bis 6, wobei die Düsenaustrittsflächen (36) gegen die Rotationsrichtung angestellt sind.

10. Verdichter mit einem System (6) nach einem der vorhergehenden Ansprüche.

11. Verdichter nach Anspruch 10, wobei Düsen (8) des Systems (6) statorseitig im Hinterkantenbereich (38) zumindest einer von Laufschaufeln (40) gebildeten Schaufelreihe angeordnet sind.

12. Turbomaschine mit einem Verdichter nach einem Anspruch 10 oder 11.
